# EUROPÄISCHE PATENTSCHRIFT

(11) **EP 3 954 626 B1**
(45) Veröffentlichungstag und Bekanntmachung des Hinweises auf die Patenterteilung: **24.06.2026**
(21) Anmeldenummer: 21198082.6
(22) Anmeldetag: 16.05.2017
(51) Int. Cl.: B65D 47/12, B65D 51/16

(54) **FLÜSSIGKEITSSPENDER**
LIQUID DISPENSER
DISTRIBUTEUR DE LIQUIDE

(30) Priorität: 20.06.2016 DE 102016210992
(43) Veröffentlichungstag der Anmeldung: 16.02.2022
(62) Teilanmeldung aus: 17724539.6
(73) Patentinhaber: Aptar Radolfzell GmbH, 78315 Radolfzell (DE)
(72) Erfinder: Greiner-Perth, Jürgen, 78244 Gottmadingen (DE); Herz, Andi, 78253 Eigeltingen-Reute (DE); Jung, Timo, 78315 Radolfzell (DE); Krampen, Gerald, 78315 Radolfzell (DE)
(74) Vertreter: Witte, Weller und Partner Patentanwälte mbB Stuttgart

(56) Entgegenhaltungen:
- EP-A2- 3 023 383
- DE-A1- 102013 226 250

## Beschreibung

Die Erfindung betrifft einen Flüssigkeitsspender zum Austragen von insbesondere pharmazeutischen Flüssigkeiten nach den Oberbegriffen des Anspruchs 1. Ein solcher Flüssigkeitsspender verfügt über einen Austragkopf mit Austragöffnung sowie über eine Kappe mit einem Kappenkörper, der im aufgesetzten Zustand die Austragöffnung schützt.

Die Kappenkörper erfindungsgemäßer Flüssigkeitsspender verfügen über eine Belüftungsöffnung, damit nach Inbetriebnahme ein Luftaustausch zwischen dem Innenraum des Kappenkörpers und einer umgebenden Atmosphäre möglich ist.

Aus der DE 10 2013 226 250 A1 ist es bereits bekannt, eine Belüftungsöffnung im Kappenkörper mit einem Klebestreifen oder einer angespritzten Abziehlasche zu schließen, die im Zuge der Inbetriebnahme entfernt werden.

### AUS DER EP 3 023 383 A2 EIN BEHÄLTERS BEISPIELSWEISE FÜR CHEMIKALIEN FÜR HALBLEITER-FERTIGUNGSANLAGEN BEKANNT. DIESER VERFÜGT AN EINER BEFÜLLUNGS- UND DRUCKAUSGLEICHSÖFFNUNG ÜBER EINE KAPPE MIT EINEM INTEGRIERTEN FILTER.AUFGABE UND LÖSUNG

Aufgabe der Erfindung ist es, eine fertigungstechnisch günstige Möglichkeit zu schaffen, um zu gewährleisten, dass durch die Belüftungsöffnung vor Inbetriebnahme des Spenders keine Kontamination an die Austragöffnung gelangt.

Gemäß der Erfindung ist ein erfindungsgemäßer Flüssigkeitsspender wie nachfolgend erläutert ausgebildet. Der Flüssigkeitsspender verfügt über einen Austragkopf, an dem eine Austragöffnung vorgesehen ist, sowie über eine Kappe mit einem Kappenkörper, der auf den Austragkopf aufsetzbar und von diesem abnehmbar ist und der im aufgesetzten Zustand die Austragöffnung überdeckt. Dieser Kappenkörper verfügt über die genannte Belüftungsöffnung, die eine umgebende Atmosphäre mit einem Innenraum des Kappenkörpers verbindet, so dass nach Inbetriebnahme des Flüssigkeitsspenders bei aufgesetztem Kappenkörper die vom Kappenkörper überdeckte Austragöffnung durch die Verbindung mit der umgebenden Atmosphäre abtrocknen kann.

Die Belüftungsöffnung ist mit einer Filtermembran zur Filtrierung der hindurchströmenden Luft versehen. Der Kappenkörper weist zwei Teilkörper auf, die gemeinsam einen Aufnahmeraum für die Filtermembran bilden.

Die Besonderheit liegt darin, dass der Kappenkörper aus zwei Teilkörpern zusammengesetzt ist, zwischen denen die genannte Filtermembran angeordnet ist. Grundsätzlich kann zusätzlich vorgesehen sein, dass die Belüftungsöffnung, in der die Filtermembran vorgesehen ist, vor Inbetriebnahme zusätzlich verschlossen ist, beispielsweise durch einen Abziehabschnitt oben beschriebener Art. Beim Vorhandensein einer Filtermembran kann auf einen solchen Verschluss jedoch auch verzichtet werden, da das Eintreten von Verunreinigungen durch die Filtermembran wirksam verhindert wird. Diese weist hierfür vorzugsweise einen mittleren Porendurchmesser zwischen 0,1 µm und 0,3 µm auf. Durch die beiden Teilkörper wird eine fertigungstechnisch vorteilhafte Möglichkeit geschaffen, eine vergleichsweise großflächige Membran in einem automatisierten Fertigungsprozess am Kappenkörper vorzusehen.

Besonders vorteilhaft ist es, wenn der erste Teilkörper einen Kappenhauptkörper mit einer Mantelfläche und einer Stirnfläche mit einer ersten Durchbrechung bildet. Der zweite Teilkörper kann dann als Ringkörper ausgebildet sein, der umlaufend am ersten Teilkörper befestigbar ist und eine mit der ersten Durchbrechung fluchtende zweite Durchbrechung aufweist.

Hierbei sieht eine erste Möglichkeit der Gestaltung vor, dass die beiden Teilkörper separat hergestellt werden und mittels einer kraftschlüssigen oder insbesondere formschlüssigen Kopplung miteinander verbunden werden, wobei die Membran zwischen ihnen eingelegt und dort vorzugsweise verklemmt wird.

Eine alternative Gestaltung sieht vor, dass die Teilkörper stoffschlüssig miteinander verbunden sind. Hierbei wird insbesondere eine Variante als vorteilhaft angesehen, bei der im Rahmen der Fertigung zunächst der den Kappenhauptkörper bildende erste Teilkörper über Spritzguss gefertigt wird, dann die Membran in das Werkzeug eingelegt wird und anschließend der zweite Teilkörper an den ersten Teilkörper angespritzt wird. Während dieses Anspritzprozesses muss ein Teil der Membranoberfläche von Kunststoff freigehalten werden. Dort, wo bestimmungsgemäß die Membran beim Anspritzen von Kunststoff überdeckt wird, bildet sich eine innige Fügung zwischen dem zweiten Teilkörper und der Membran, wodurch wirksam verhindert wird, dass ein die Membran umgehender Pfad offen bleibt, durch den Bakterien oder andere Verunreinigungen eindringen könnten.

Die erste Durchbrechung kann über eine die Durchbrechung in mehrere Teildurchbrechungen unterteilende Innenstruktur verfügen, auf der die Filtermembran aufliegt.

Die Innenstruktur kann beispielsweise gitterförmig oder speichenartig sein. Insbesondere bei der beschriebenen Ausgestaltung, bei der die Membran nach Spritzen des ersten Teilkörpers eingelegt wird, ist es von Vorteil, wenn die genannte Innenstruktur vorhanden ist, damit die Filtermembran beim Anspritzen ihre Position behält und insbesondere damit ein vollständiges Überdecken der Filtermembran durch einen werkzeugseitigen Verdrängungskörper verhindert werden kann, der zu diesem Zweck gegen die Membran gedrückt wird, die sich ihrerseits an besagter Innenstruktur abstützt. Des Weiteren ist diese Innenstruktur auch während der Benutzung des Produktes von Vorteil, da sie verhindert, dass versehentlich die Filtermembran durch Kraftbeaufschlagung in die Kappe hineingedrückt wird.

Die beiden Teilkörper weisen zur Bildung des Aufnahmeraums aufeinander zu weisende Flächen auf, zwischen denen die Filtermembran angeordnet ist, die dabei durch die Flächen beidseitig gestützt wird.

Die aufeinander zu weisenden Flächen an den beiden Teilkörpern bilden vorzugsweise insbesondere eine umlaufende einseitig offene Kammer, in der der Randbereich der Membran eingeschoben ist. Wie bereits erwähnt, kann beim Anspritzen des zweiten Teilkörpers die auf seiner Seite vorgesehene Fläche eine innige Verbindung mit der Membran eingehen, die zu einer besonders guten Abdichtung führt.

An einem der Teilkörper können elastisch auslenkbare Abschnitte vorgesehen sein, die durch Zusammenfügung mit der Filtermembran oder dem anderen Teilkörper elastisch ausgelenkt sind und in Richtung der Filtermembran eine Haltekraft bewirken.

Die genannten elastisch auslenkbaren Abschnitte können während der Fertigung der Kappe durch die eingelegte Filtermembran ausgelenkt und somit gespannt werden, so dass sie nach Anfügung des zweiten Teilkörpers die Membran gegen diesen zweiten Teilkörper kraftbeaufschlagen und somit eine zusätzliche Positionssicherung für die Filtermembran darstellen.

Die Kappen gemäß beiden beschriebenen Varianten sind vorzugsweise aus Kunststoff gefertigt, beispielsweise aus Polypropylen oder Polyethylen.

Die Gestaltung der Spender ist grundsätzlich flexibel. Es kann sich um Spender mit Pumpe oder einem schaltbaren Auslassventil handeln, mittels dessen zuvor unter Druck gesetzte Flüssigkeit gezielt ausgetragen werden kann. Insbesondere von Vorteil ist jedoch eine Gestaltung mit einer Quetschflasche als Flüssigkeitsspeicher. Bei einer solchen Gestaltung ist vorzugsweise zusätzlich vorgesehen, dass im Austragkopf ein druckabhängig öffnendes Auslassventil vorgesehen ist, welches erst bei ausreichender Druckbeaufschlagung der Flüssigkeit, insbesondere in der Quetschflasche, öffnet und somit einen Austrag von Flüssigkeit gestattet.

Die erfindungsgemäße Kappe kann zudem bei Spendern verschiedener Austragcharakteristik verwendet werden, so beispielsweise bei Sprühspendern. Insbesondere vorgesehen ist die Verwendung jedoch bei Tropfenspendern, da solche Tropfenspender die Austragöffnung umgebend über eine Tropfenbildungsfläche verfügen, an der sich bestimmungsgemäß die ausgetragene Flüssigkeit sammelt, bevor sich der Tropfen löst. Gerade bei solchen Spendern ist es von Vorteil, durch eine Kappe mit Belüftungsöffnung ein Abtrocknen nach der Benutzung zu ermöglichen.

Ein erfindungsgemäßer Spender kann insbesondere als Tropfenspender zur Abgabe von Augentropfen ausgebildet sein.

Unter den Begriff des Flüssigkeitsspenders im Sinne dieser Erfindung fallen sowohl ebenso Spender für niederviskose Flüssigkeiten ähnlich Wasser wie Spender für hochviskose, eher pastöse Flüssigkeiten.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen ein erstes Ausführungsbeispiel eines Spenders im Lieferzustand.
Fig. 2A und 2B zeigen die Kappe des Spenders gemäß den Figuren 1A und 1B im Zuge der Überführung des Spenders in den Nutzzustand.
Fig. 3A und 3B zeigen den Spender der Fig. 1A und 1B im Nutzzustand.
Fig. 4 zeigt ein Ausführungsbeispiel eines erfindungsgemäßen Spenders.
Fig. 5A bis 5C sowie 6A und 6B verdeutlichen den Aufbau der Kappe des Spenders der Fig. 4.

### DETAILLIERTE BESCHREIBUNG DER AUSFÜHRUNGSBEISPIELE

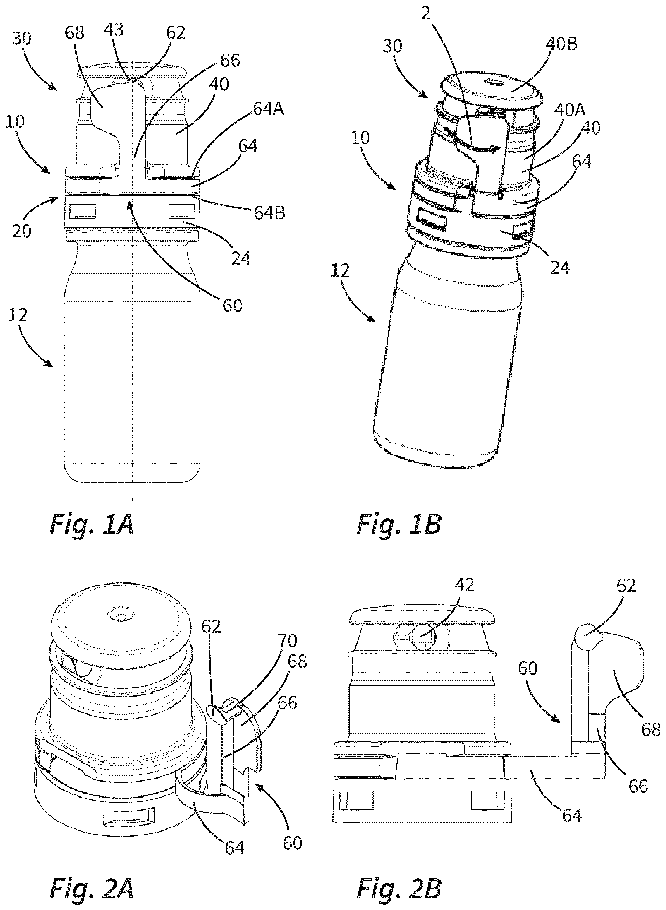

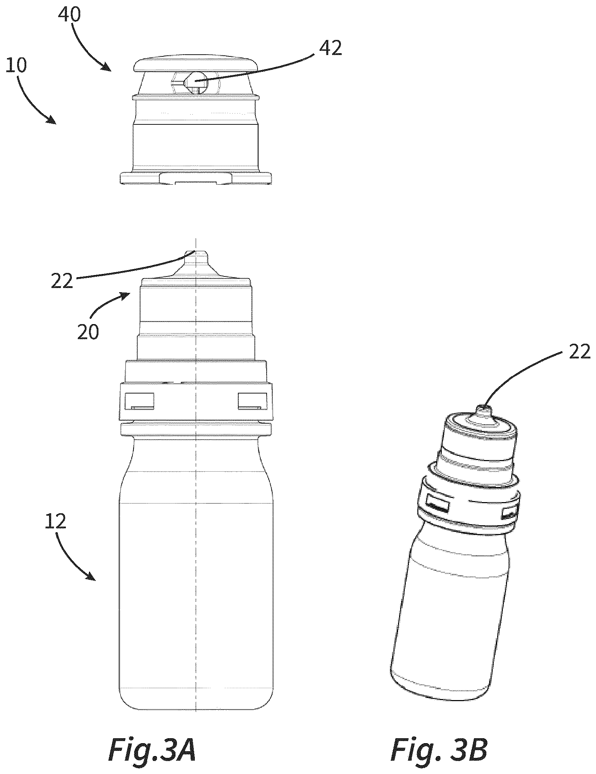

Die Fig. 1A bis 3B zeigen ein erstes Ausführungsbeispiel eines nicht erfindungsgemäßen Flüssigkeitsspenders.

Dabei zeigen die Fig. 1A und 1B den Flüssigkeitsspender 10 im Lieferzustand. Der Flüssigkeitsspender 10 verfügt über einen als Quetschflasche ausgebildeten Flüssigkeitsspeicher 12 sowie über einen darauf aufgesetzten Austragkopf 20 mit einer in den Fig. 1A und 1B nicht dargestellten Austragöffnung 22, die durch einen Kappenkörper 40 geschützt wird. Dieser Kappenkörper 40 ist Teil einer Kappe 30, die im Lieferzustand zusätzlich ein abtrennbares Segment 60 umfasst, welches zum Zwecke der Inbetriebnahme des Flüssigkeitsspenders 10 zunächst vom Kappenkörper 40 zu trennen ist. Dieses trennbare Segment 60 umfasst einen umlaufenden Originalitätsabschnitt 64 in Form eines Rings, der in Anbindungsbereichen 64A, 64B einerseits mit dem Kappenkörper 40 und andererseits mit einem am Austragkopf 20 befestigten ringförmigen Halteabschnitt 24 verbunden ist. Dieser Originalitätsabschnitt 64 verhindert im Lieferzustand zunächst ein Abnehmen des Kappenkörpers 40 vom Austragkopf 20.

Das abtrennbare Segment 60 verfügt darüber hinaus über einen Abziehabschnitt 62, der eine Belüftungsöffnung 42 verschließt und zu diesem Zweck entlang einer umlaufenden Trennlinie 43 einstückig mit der Mantelfläche des Kappenkörpers 40 verbunden ist. Im Bereich dieser Trennlinie ist das Kunststoffmaterial der Kappe 30 sehr dünn gestaltet, so dass sich hier eine Solltrennlinie ergibt.

Der Abziehabschnitt 62 und der Originalitätsabschnitt 64 sind miteinander über einen Verbindungsabschnitt 66 verbunden, im Bereich dessen das trennbare Segment 60 nicht mit der Mantelfläche 40A des Kappenkörpers 40 verbunden ist. Der Verbindungsabschnitt 66 ist ebenso wie ein Greifabschnitt 68 vergleichsweise dickwandig gestaltet, so dass bei der bestimmungsgemäßen Handhabung des trennbaren Segments 60 hier keine wesentlichen Verformungen auftreten.

Zur Inbetriebnahme des Spenders wird das trennbare Segment 60 im Bereich des Greifabschnitts 68 ergriffen und in Richtung des Pfeils 2 verkippt.

Bezug nehmend auf die Fig. 2A und 2B bewirkt dies zunächst, dass der Abziehabschnitt 62 die Belüftungsöffnung 42 freigibt. Dies wird durch einen starr ausgebildeten Abstandsabschnitt 70 begünstigt, der eine vergleichsweise hohe Hebelkraft bewirkt, durch die die Verbindung zwischen Abziehabschnitt und Mantelfläche im spitz zulaufenden bezogen auf Fig. 2B linken Bereich der Belüftungsöffnung getrennt wird. Anschließend ist ein vollständiges Abziehen des Abziehabschnitts 62 von der Belüftungsöffnung unter geringem Krafteinsatz möglich. Bei der fortgesetzten Bewegung des trennbaren Segments 60 erfolgt eine Trennung des Originalitätsabschnitts 64 vom Halteabschnitt 24 sowie dem Kappenkörper 40, so dass anschließend der Kappenkörper 40 abgenommen und nach Verwendung des Spenders wieder aufgesetzt werden kann. Der Austragkopf 20 und der Kappenkörper 40 sind so aufeinander abgestimmt, dass die Kappe kraftschlüssig am Austragkopf hält.

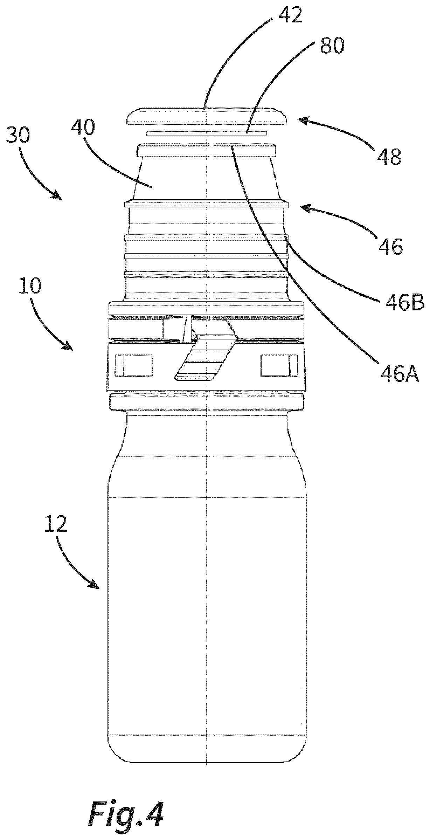

Fig. 4 zeigt ein Ausführungsbeispiel der Erfindung, wobei sich dieses vom ersten Ausführungsbeispiel nur durch die Ausgestaltung der Kappe 30 unterscheidet. Der Flüssigkeitsspeicher 12 und der Austragkopf 20 sind hingegen identisch zum vorbeschriebenen Ausführungsbeispiel.

Wie in Fig. 4 schon angedeutet, besteht die Kappe 30 hier aus zwei Teilkörpern 46, 48, zwischen denen eine Filtermembran 80 angeordnet ist.

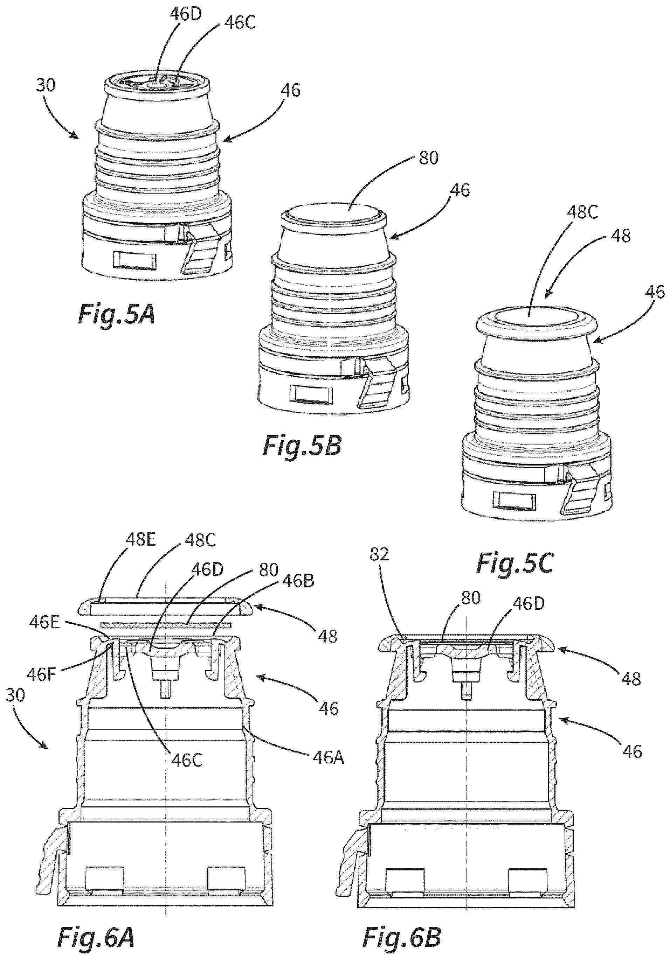

In den Fig. 6A und 6B ist der Aufbau geschnitten dargestellt. Der Teilkörper 46 bildet den Kappenhauptkörper mit einer Mantelfläche 46A und einer Stirnfläche 46B, über die sich eine Innenstruktur 46D erstreckt, in der Durchbrechungen 46C zum Zwecke der Belüftung vorgesehen sind. Auf dieser Stirnfläche und der Innenstruktur 46D wird die Filtermembran 80 positioniert, bevorzugt der zweite Teilkörper 48, der ringförmig ausgestaltet ist und über eine Durchbrechung 48C verfügt, aufgesetzt wird. Durch elastisch auslenkbare krallenartige Elemente 46F wird die Filtermembran 80 dabei wirksam lagefixiert. Zusätzlich ist ihr Rand in der aus Fig. 6B ersichtlichen Weise in einem durch die beiden Teilkörper 46, 48 gebildeten umlaufenden Aufnahmeraum 82 eingeklemmt. Die verschiedenen Stadien während der Fertigung der Kappe 30 sind anhand der Fig. 5A bis 5C verdeutlicht.

Der ringförmige Teilkörper 48 kann kraftschlüssig mittels einer Presspassung an der Innenseite des Teilkörpers 48 und der Außenseite des Teilkörpers 46 gebildet sein. Auch ist es möglich, dass hier eine Schnappverbindung vorgesehen wird.

Eine besonders vorteilhafte Gestaltung sieht vor, dass beim Spritzgussprozess zunächst der Teilkörper 46 erzeugt wird und nach dessen Erstarren die Filtermembran 80 auf der Stirnfläche aufgelegt wird.

Der zweite Teilkörper 48 kann dann durch Anspritzen an den ersten Teilkörper erzeugt werden. Hierdurch wird einerseits eine besonders feste Verbindung zwischen den Teilkörpern durch Stoffschluss geschaffen. Zum anderen geht auch die nach unten gewandte Fläche 48E am zweiten Teilkörper 48 hier eine besonders innige Verbindung mit den Randbereichen der Filtermembran 80 ein, so dass kein Bakteriendurchtritt zu befürchten ist. An der Unterseite der Filtermembran 80, die auf der Stirnfläche 46B und dort auf der Fläche 46E aufliegt, entsteht keine solche innige Verbindung.

Zwar wäre es grundsätzlich auch denkbar, die beiden Teilkörper 46 und 48 stattdessen gemeinsam zu spritzen. Dies würde jedoch mit einem sehr komplexen Werkzeug einhergehen, um derweil die Filtermembran 80 in Position zu halten und umspritzen zu können. Daher ist das erfindungsgemäße Verfahren mit Auflegen der Membran auf dem ersten Teilkörper 46 von Vorteil.

## Patentansprüche

1. Flüssigkeitsspender (10) zum Austragen von pharmazeutischen Flüssigkeiten mit den folgenden Merkmalen:
a. der Flüssigkeitsspender (10) verfügt über einen Austragkopf (20), an dem eine Austragöffnung (22) vorgesehen ist, und
b. der Flüssigkeitsspender (10) verfügt über eine Kappe (30) mit einem Kappenkörper (40), der auf den Austragkopf (20) aufsetzbar und von diesem abnehmbar ist und der im aufgesetzten Zustand die Austragöffnung (22) überdeckt, und
c. der Kappenkörper (40) verfügt über eine Belüftungsöffnung (42), die eine umgebende Atmosphäre mit einem Innenraum (44) des Kappenkörpers (40) verbindet, so dass nach Inbetriebnahme des Flüssigkeitsspenders bei aufgesetztem Kappenkörper (40) die vom Kappenkörper (40) überdeckte Austragöffnung (22) durch die Verbindung mit der umgebenden Atmosphäre abtrocknen kann, und
d. die Belüftungsöffnung (42) ist mit einer Filtermembran (80) zur Filtrierung der hindurchströmenden Luft versehen,
**gekennzeichnet durch** die Merkmale:
e. der Kappenkörper (40) weist zwei Teilkörper (46, 48) auf, die gemeinsam einen Aufnahmeraum (82) für die Filtermembran (80) bilden.

2. Flüssigkeitsspender (10) nach Anspruch 1, **gekennzeichnet durch** die Merkmale:
a. erster Teilkörper (46) ist ein Kappenhauptkörper mit einer Mantelfläche (46A) und einer Stirnfläche (46B) mit einer ersten Durchbrechung (46C), und
b. zweiter Teilkörper (48) ist ein Ringkörper, der umlaufend am ersten Teilkörper (46) befestigbar ist und eine dann mit der ersten Durchbrechung (46C) fluchtende zweite Durchbrechung (48C) aufweist.

3. Flüssigkeitsspender (10) nach Anspruch 1 oder 2, mit dem folgenden Merkmal:
a. die beiden Teilkörper (46, 48) sind form- und/oder kraftschlüssig miteinander verbunden.

4. Flüssigkeitsspender (10) nach Anspruch 1 oder 2, mit dem folgenden Merkmal:
a. die beiden Teilkörper (46, 48) sind stoffschlüssig miteinander verbunden, insbesondere dadurch, dass der zweite Teilkörper (48) an den ersten Teilkörper (46) angespritzt ist.

5. Flüssigkeitsspender (10) nach einem der Ansprüche 2 bis 4 mit dem folgenden Merkmal:
a. die erste Durchbrechung (46C) verfügt über eine die Durchbrechung (46C) in mehrere Teildurchbrechungen unterteilende Innenstruktur (46D), auf der die Filtermembran (80) aufliegt.

6. Flüssigkeitsspender (10) nach einem der Ansprüche 1 bis 5 mit den folgenden Merkmalen:
a. die beiden Teilkörper (46, 48) weisen aufeinander zu weisende Flächen (46E, 48E) auf, zwischen denen die Filtermembran (80) angeordnet ist, die durch die Flächen (46E, 48E) beidseitig gestützt wird.

7. Flüssigkeitsspender (10) nach einem der Ansprüche 1 bis 6 mit den folgenden Merkmalen:
a. an einem der Teilkörper (46) sind elastisch auslenkbare Abschnitte (46F) vorgesehen, die durch Zusammenfügung mit der Filtermembran (80) oder dem anderen Teilkörper (48) elastisch ausgelenkt sind und in Richtung der Filtermembran (80) eine Haltekraft bewirken.

8. Flüssigkeitsspender (10) nach einem der Ansprüche 1 bis 7 mit den folgenden Merkmalen:
a. die Filtermembran ist als Mikrofiltrationsmembran ausgebildet und weist einen mittleren Porendurchmesser zwischen 0,1 µm bis ca. 0,3 µm auf.

9. Flüssigkeitsspender (10) nach einem der Ansprüche 1 bis 8 mit den folgenden Merkmalen:
a. ein umlaufender Randbereich der Filtermembran ist zwischen den Teilkörpern des Kappenkörpers angeordnet.

10. Flüssigkeitsspender (10) nach einem der vorstehenden Ansprüche mit dem folgenden Merkmal:
a. die Kappe ist aus Kunststoff gefertigt.

11. Flüssigkeitsspender (10) nach einem der vorstehenden Ansprüche mit dem folgenden Merkmal:
a. der Flüssigkeitsspender verfügt über einen Flüssigkeitsspeicher (12), der als Quetschflasche ausgebildet ist.

12. Flüssigkeitsspender (10) nach einem der vorstehenden Ansprüche mit dem folgenden Merkmal:
a. der Austragkopf umfasst ein druckabhängig öffnendes Auslassventil.

13. Flüssigkeitsspender (10) nach einem der vorstehenden Ansprüche mit dem folgenden Merkmal:
a. der Austragkopf ist zur Abgabe einzelner Tropfen ausgebildet.

## Claims

1. Liquid dispenser (10) for discharging pharmaceutical liquids, with the following features:
a. the liquid dispenser (10) possesses a discharge head (20) on which a discharge opening (22) is provided, and
b. the liquid dispenser (10) possesses a cap (30) with a cap body (40), which can be attached to the discharge head (20) and is removable from the latter and which, in the attached state, covers the discharge opening (22), and
c. the cap body (40) possesses a ventilation opening (42) which connects a surrounding atmosphere to an interior space (44) of the cap body (40) in such a way that upon putting the liquid dispenser into operation with the cap body (40) attached, the discharge opening (22) covered by the cap body (40) can dry on account of the connection to the surrounding atmosphere, and
d. the ventilation opening (42) is provided with a filter membrane (80) for filtering the air flowing through,
**characterized by** the following features:
e. the cap body (40) has two sub-bodies (46, 48) which conjointly form a receptacle space (82) for the filter membrane (80).

2. Liquid dispenser (10) according to Claim 1, **characterized by** the following features:
a. a first sub-body (46) is a cap main body with a casing surface (46A) and an end surface (46B) with a first cut-out (46C), and
b. the second sub-body (48) is an annular body which is able to be fastened to the first sub-body (46) in an encircling manner and has a second cut-out (48C) which then is co-aligned with the first cut-out (46C).

3. Liquid dispenser (10) according to Claim 1 or 2, with the following feature:
a. the two sub-bodies (46, 48) are connected to one another in a form-fitting and/or force-fitting manner.

4. Liquid dispenser (10) according to Claim 1 or 2, with the following feature:
a. the two sub-bodies (46, 48) are connected to one another in a materially integral manner, in particular owing to the fact that the second sub-body (48) is integrally moulded on the first sub-body (46).

5. Liquid dispenser (10) according to one of Claims 2 to 4, with the following feature:
a. the first cut-out (46C) possesses an internal structure (46D) on which the filter membrane (80) rests and which sub-divides the cut-out (46C) into a plurality of partial cut-outs.

6. Liquid dispenser (10) according to one of Claims 1 to 5, with the following features:
a. the two sub-bodies (46, 48) have surfaces (46E, 48E) which point towards one another and between which is disposed the filter membrane (80) that is supported on both sides by the surfaces (46E,48E).

7. Liquid dispenser (10) according to one of Claims 1 to 6, with the following features:
a. provided on one of the sub-bodies (46) are elastically deflectable portions (46F) which are elastically deflected due to being joined to the filter membrane (80), or to the other sub-body (48), and effect a retaining force acting in the direction of the filter membrane (80).

8. Liquid dispenser (10) according to one of Claims 1 to 7, with the following features:
a. the filter membrane is designed as a microfiltration membrane and has a mean pore diameter between 0.1 µm and approx. 0.3 µm.

9. Liquid dispenser (10) according to one of Claims 1 to 8, with the following features:
a. an encircling peripheral region of the filter membrane is disposed between the sub-bodies of the cap body.

10. Liquid dispenser (10) according to one of the preceding claims, with the following feature:
a. the cap is made of plastics material.

11. Liquid dispenser (10) according to one of the preceding claims, with the following feature:
a. the liquid dispenser has a fluid reservoir (12) designed as a squeeze bottle.

12. Liquid dispenser (10) according to one of the preceding claims, with the following feature:
a. the discharge head comprises an outlet valve that opens as a function of pressure.

13. Liquid dispenser (10) according to one of the preceding claims, with the following feature:
a. the discharge head is designed to dispense individual drops.

## Revendications

1. Distributeur de liquide (10) pour distribuer des liquides pharmaceutiques, présentant les caractéristiques suivantes :
a. le distributeur de liquide (10) dispose d'une tête de distribution (20) au niveau de laquelle une ouverture de distribution (22) est prévue, et
b. le distributeur de liquide (10) dispose d'un capuchon (30) comprenant un corps de capuchon (40) qui peut être placé sur la tête de distribution (20) et retiré de celle-ci et qui, à l'état monté, recouvre l'ouverture de distribution (22), et
c. le corps de capuchon (40) dispose d'une ouverture d'aération (42) qui relie une atmosphère ambiante à un espace intérieur (44) du corps de capuchon (40), de sorte qu'après la mise en service du distributeur de liquide, lorsque le corps de capuchon (40) est en place, l'ouverture de distribution (22) recouverte par le corps de capuchon (40) peut sécher grâce à la liaison avec l'atmosphère ambiante, et
d. l'ouverture d'aération (42) est pourvue d'une membrane filtrante (80) pour la filtration de l'air circulant à travers celle-ci,
**caractérisé par** les caractéristiques :
e. le corps de capuchon (40) présente deux parties de corps (46, 48) qui forment conjointement un espace de réception (82) pour la membrane filtrante (80).

2. Distributeur de liquide (10) selon la revendication 1, **caractérisé par** les caractéristiques :
a. le premier corps partiel (46) est un corps principal de capuchon présentant une surface latérale (46A) et une face d'extrémité (46B) avec un premier orifice (46C), et
b. le deuxième corps partiel (48) est un corps annulaire qui peut être fixé de manière périphérique au premier corps partiel (46) et qui présente un deuxième orifice (48C) alors aligné avec le premier orifice (46C).

3. Distributeur de liquide (10) selon la revendication 1 ou 2, avec la caractéristique suivante :
a. les deux corps partiels (46, 48) sont reliés l'un à l'autre par complémentarité de forme et/ou par adhérence.

4. Distributeur de liquide (10) selon la revendication 1 ou 2, avec la caractéristique suivante :
a. les deux corps partiels (46, 48) sont reliés l'un à l'autre par liaison de matière, en particulier en ce que le deuxième corps partiel (48) est surmoulé sur le premier corps partiel (46).

5. Distributeur de liquide (10) selon l'une quelconque des revendications 2 à 4, avec la caractéristique suivante :
a. le premier orifice (46C) présente une structure interne (46D) qui divise l'orifice (46C) en plusieurs orifices partiels, sur laquelle la membrane filtrante (80) repose.

6. Distributeur de liquide (10) selon l'une quelconque des revendications 1 à 5, présentant les caractéristiques suivantes :
a. les deux corps partiels (46, 48) présentent des surfaces (46E, 48E) orientées l'une vers l'autre, entre lesquelles la membrane filtrante (80) est disposée, celle-ci étant supportée des deux côtés par les surfaces (46E, 48E).

7. Distributeur de liquide (10) selon l'une quelconque des revendications 1 à 6, présentant les caractéristiques suivantes :
a. sur l'un des corps partiels (46), des sections élastiquement déformables (46F) sont prévues, lesquelles sont élastiquement déformées lors de l'assemblage avec la membrane filtrante (80) ou avec l'autre corps partiel (48) et exercent une force de maintien en direction de la membrane filtrante (80).

8. Distributeur de liquide (10) selon l'une quelconque des revendications 1 à 7, présentant les caractéristiques suivantes :
a. la membrane filtrante est réalisée sous la forme d'une membrane de microfiltration et présente un diamètre moyen de pores compris entre 0,1 µm et environ 0,3 µm.

9. Distributeur de liquide (10) selon l'une quelconque des revendications 1 à 8, présentant les caractéristiques suivantes :
a. une zone de bord périphérique de la membrane filtrante est disposée entre les corps partiels du corps de capuchon.

10. Distributeur de liquide (10) selon l'une quelconque des revendications précédentes, avec la caractéristique suivante :
a. le capuchon est fabriqué en matière plastique.

11. Distributeur de liquide (10) selon l'une quelconque des revendications précédentes, avec la caractéristique suivante :
a. le distributeur de liquide dispose d'un réservoir de liquide (12) qui est réalisé sous la forme d'un flacon compressible.

12. Distributeur de liquide (10) selon l'une quelconque des revendications précédentes, avec la caractéristique suivante :
a. la tête de distribution comprend une valve de sortie s'ouvrant en fonction de la pression.

13. Distributeur de liquide (10) selon l'une quelconque des revendications précédentes, avec la caractéristique suivante :
a. la tête de distribution est configurée pour délivrer des gouttes individuelles.
